# FASCICULE DE BREVET EUROPEEN

(11) **EP 2 427 377 B1**
(45) Date de publication et mention de la délivrance du brevet: **15.07.2015**
(21) Numéro de dépôt: 10727097.7
(22) Date de dépôt: 04.05.2010
(51) Int. Cl.: B64F 1/28, B67D 7/08

(54) **ENGIN D'AVITAILLEMENT ET PROCÉDÉ D'AVITAILLEMENT D'UN AÉRONEF EN CARBURANT AU MOYEN D'UN TEL ENGIN**
FLUGZEUGBETANKUNGSFAHRZEUG SOWIE METHODE ZUR FLUGZEUGBETANKUNG
AIRCRAFT REFUELLING VEHICLE AND METHOD OF REFUELLING AN AIRCRAFT

(30) Priorité: 05.05.2009 FR 0952974
(43) Date de publication de la demande: 14.03.2012
(73) Titulaire: Desautel, 69003 Lyon (FR)
(72) Inventeur: BECK, Claude, F-33200 Bordeaux (FR)
(74) Mandataire: Myon, Gérard Jean-Pierre
(86) Numéro de dépôt international: PCT/FR2010/050854
(87) Numéro de publication internationale: WO 2010/128246

(56) Documents cités:
- WO-A-97/23739
- GB-A- 2 293 658
- US-A- 5 921 266
- US-A1- 2005 189 036
- US-B1- 6 234 224

## Description

L'invention a trait à un engin d'avitaillement d'un aéronef en carburant ainsi qu'à un procédé d'avitaillement d'un aéronef en carburant au moyen d'un tel engin.

Sur les aéroports et aérodromes civils et militaires, il est connu d'utiliser des engins d'avitaillement que l'on déplace à proximité des aéronefs pour procéder au remplissage en carburant de leurs réservoirs. Un premier type d'engin d'avitaillement comprend les « avitailleurs » qui sont des véhicules munis d'une citerne dans laquelle on puise le carburant à transférer vers un réservoir d'un aéronef. Un deuxième type d'engin avitailleur comprend des véhicules destinés à se brancher sur une bouche de sortie d'un réseau fixe de distribution de carburant, parfois dénommé « oléoréseau ». Ces véhicules d'un deuxième type sont couramment dénommés « oléoserveurs » et sont prévus pour se brancher, d'une part, sur l'oléoréseau, et d'autre part, sur le réservoir de l'aéronef, en permettant le raccordement entre l'oléoréseau et ce réservoir.

Avec ces deux types d'engin d'avitaillement, un tuyau flexible est utilisé pour raccorder un système de circulation du carburant, à partir de la citerne ou de l'oléoréseau, à l'entrée d'un réservoir de l'aéronef. Pour ce faire, l'extrémité aval du tuyau flexible est pourvue de moyens de raccordement sur l'orifice d'entrée du réservoir de l'aéronef. Un engin d'avitaillement est généralement équipé de moyens de contrôle, de comptage et de régulation de l'écoulement de carburant, tels que des débitmètre(s), compteur(s) de volume et un régulateur de pression, ces dispositifs étant montés sur l'engin et permettant de piloter en boucle ouverte l'écoulement. Lorsqu'il quitte le conduit formé sur le châssis de l'engin par des tuyaux rigides, l'écoulement pénètre dans le tuyau flexible sous pression asservie mais non contrôlée en continu, ce qui pose un problème de fiabilité. Compte tenu de la position du tuyau flexible, les pertes de charges qu'il induit sont variables, au point que la pression du carburant pénétrant dans le réservoir de l'aéronef n'est pas maîtrisée précisément, alors qu'elle doit être limitée à 3,5 bar pour ne pas endommager la structure de l'aéronef, tout en étant aussi élevée que possible pour ne pas allonger inutilement la durée d'avitaillement d'un aéronef. En outre, les dispositifs de régulation et de contrôle montés sur l'engin d'avitaillement doivent faire l'objet d'une vérification périodique car ils fixent à eux seuls la pression du carburant entrant dans le réservoir de l'aéronef. Cette vérification périodique diminue le temps d'exploitation effectif donc la disponibilité, de chaque engin d'avitaillement.

Il est connu de US-B-6 234 224 de monter une jauge pression à l'extrémité aval d'un tuyau d'alimentation en carburant d'un aéronef. Cette jauge est peu accessible et la détection d'une surpression dépend de la concentration de l'opérateur. En outre, même s'il détecte une surpression, l'opérateur, qui se tient alors au voisinage du réservoir de l'aéronef, ne peut pas agir sur l'écoulement pour en diminuer la pression.

Par ailleurs US-A-5 921 266 divulgue un dispositif de transfert de fluide entre un camion citerne et une citerne fixe. Ce système ne permet pas de réagir à une éventuelle surpression de l'écoulement de fluide.

C'est à ces inconvénients qu'entend plus particulièrement remédier l'invention en proposant un nouvel engin d'avitaillement dont le fonctionnement est fiabilisé.

A cet effet, l'invention concerne un engin d'avitaillement d'un aéronef en carburant selon la revendication 1.

Au sens de la présente invention, les moyens de détermination sont au voisinage ou au niveau des moyens de raccordement en ce sens qu'ils sont à proximité du point de transfert du carburant entre le système d'avitaillement et le réservoir de l'aéronef. Ce point de transfert est défini par l'extrémité aval des moyens de raccordement, eux-mêmes montés à l'extrémité aval du tuyau flexible de l'engin d'avitaillement. En pratique, les moyens de détermination de la valeur du paramètre sont disposés à moins de 50 cm de ce point de transfert.

Grâce à l'invention, il est possible de connaître la valeur du paramètre de l'écoulement, par exemple sa pression, immédiatement avant que le carburant ne pénètre dans le réservoir. Les moyens d'émission et le récepteur permettent que la valeur de ce paramètre soit prise en compte par le système de régulation embarqué sur l'engin, notamment par l'unité électronique, de façon à conserver cette valeur dans une plage prédéterminée correspondant aux préconisations du constructeur de l'aéronef et des autorités aéronautiques et pétrolières.

Selon des aspects avantageux mais non obligatoires de l'invention, un tel engin peut incorporer une ou plusieurs des caractéristiques suivantes, prises dans toute combinaison techniquement admissible :
- Les moyens de détermination comprennent un capteur de pression de l'écoulement, un capteur de volume de l'écoulement, éventuellement de précision métrologique, et/ou un capteur de température de l'écoulement. Ces moyens peuvent être complétés par des mesures de la turbidité du carburant distribué, de sa densité etc.
- L'engin comprend en outre, au niveau ou au voisinage des moyens de raccordement, des moyens d'identification d'un aéronef et des moyens d'émission vers un récepteur embarqué sur l'engin d'avitaillement d'un signal représentatif du résultat de l'identification obtenue par les moyens d'identification.
- Les moyens d'émission sont des moyens d'émission sans fil.
- Les moyens d'émission sont aptes à émettre le signal représentatif, à finalité de comparaison pour validation, sur au moins deux canaux distincts, de préférence trois canaux distincts, ou vers au moins deux adresses distinctes, de préférence trois adresses distinctes.
- L'engin comprend des moyens d'enregistrement des valeurs déterminées du ou des paramètres et, éventuellement, des données d'identification de l'aéronef.
- L'engin comprend, au niveau ou au voisinage des moyens de raccordement, des moyens autonomes d'alimentation des moyens de détermination, des moyens d'émission et, le cas échéant, des moyens d'identification.
- L'engin d'avitaillement est un oléoserveur équipé d'un tuyau permettant de le raccorder sur une bouche de sortie d'un réseau fixe de distribution de carburant et l'unité électronique pilote des dispositifs qui régulent et contrôlent l'écoulement entre la bouche et l'entrée du réservoir de l'aéronef, en fonction du signal reçu du récepteur.
- En variante, l'engin d'avitaillement est équipé d'une citerne et l'unité électronique pilote des dispositifs qui régulent et contrôlent l'écoulement entre la citerne et l'entrée du réservoir de l'aéronef, en fonction du signal reçu du récepteur.

L'invention concerne également un procédé d'avitaillement d'un aéronef en carburant qui peut être mis en oeuvre avec un engin tel que mentionné ci-dessus et, plus spécifiquement, un procédé selon la revendication 10.

On peut prévoir que les étapes a) et b) de la revendication 10 sont effectuées de façon continue ou répétée au cours d'une opération d'avitaillement et que les valeurs du paramètre déterminées lors de l'étape a) sont enregistrées sur la durée de l'opération d'avitaillement.

L'invention sera mieux comprise et d'autres avantages de celle-ci apparaîtront plus clairement à la lumière de la description qui va suivre d'un mode de réalisation d'un engin d'avitaillement et d'un procédé d'avitaillement conformes à son principe, donnée uniquement à titre d'exemple et faite en référence aux dessins annexés dans lesquels :
- la figure 1 est une représentation schématique de principe d'un engin d'avitaillement conforme à l'invention en cours d'utilisation pour remplir le réservoir d'un aéronef en carburant,
- la figure 2 est une représentation schématique de principe à plus grande échelle de l'extrémité aval d'un tuyau flexible de raccordement de l'engin au réservoir, en place sur l'orifice d'entrée d'un réservoir.
- la figure 3 est un schéma bloc partiel d'un procédé d'avitaillement mis en oeuvre avec l'engin des figures 1 et 2, et
- la figure 4 est une vue analogue à la figure 2, pour un engin conforme à un deuxième mode de réalisation de l'invention.

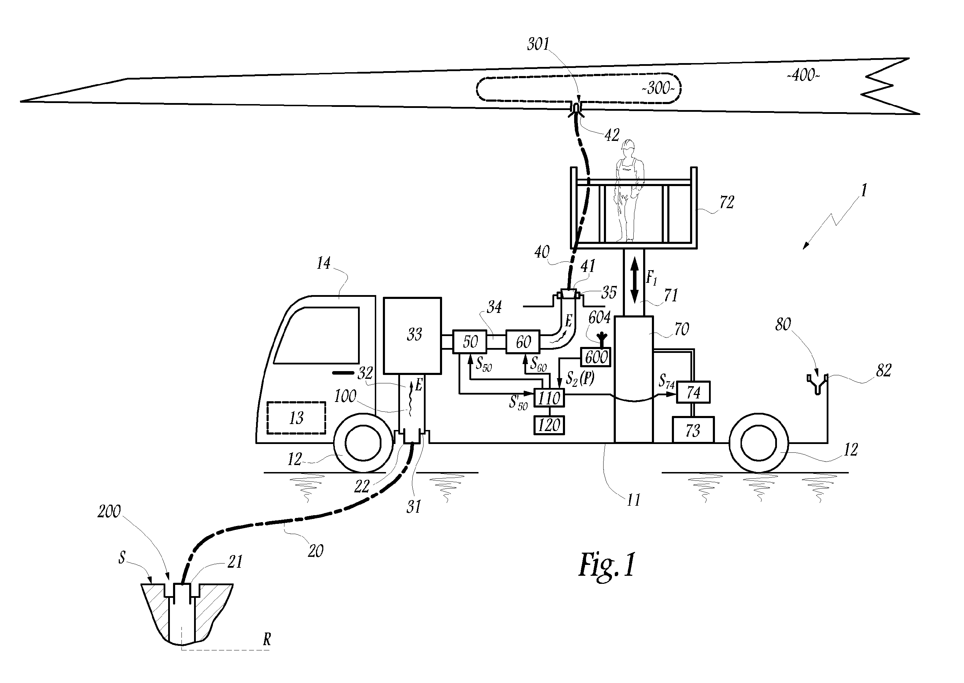

L'engin d'avitaillement ou oléoserveur 1 représenté à la figure 1 se présente globalement sous la forme d'un véhicule industriel et comporte un châssis 11 qui repose sur le sol par des roues, dont deux sont visibles avec la référence 12, et qui supporte un moteur à combustion interne 13 au-dessus duquel est disposée une cabine 14 pour le chauffeur de cet engin.

L'engin 1 est équipé d'un tuyau flexible 20 permettant de le raccorder sur une bouche de sortie 200 appartenant à un réseau fixe R de distribution de carburant dans un aéroport. La bouche 200 est disposée sous la surface S du sol, au voisinage d'un emplacement de stationnement d'un aéronef. Le tuyau 20 est équipé d'un connecteur 21 de raccordement sur la bouche 200. A son extrémité opposée au connecteur 21, le tuyau 20 est équipé d'un autre connecteur 22 de raccordement sur un connecteur 31 constituant l'embouchure d'un conduit 32 fixe de l'engin 1. En d'autres termes, le tuyau 20 permet de raccorder la bouche de sortie 200 qui appartient au réseau fixe R, au conduit 32, qui appartient à l'engin 1.

Le conduit 32 débouche dans un filtre 33 prévu pour débarrasser le carburant des résidus, notamment aqueux, qu'il peut contenir.

En aval du filtre 33, un conduit 34 s'étend jusqu'à un connecteur 35 sur lequel est raccordé un connecteur amont 41 d'un second tuyau flexible 40 dont l'extrémité aval est équipée d'un « accrocheur d'aile » 42 qui constitue un moyen de branchement du tuyau 40 sur un orifice d'entrée 301 d'un réservoir 300 intégré à l'aile 400 d'un avion.

Pour la clarté des dessins, les tuyaux flexibles 20 et 40 sont représentés, à la figure 1, par des traits d'axes correspondant à leurs axes longitudinaux respectifs.

L'accrocheur d'aile 42 comprend un corps cylindrique 421 équipé d'une bague 422 permettant son verrouillage par coopération de forme sur un connecteur correspondant non représenté délimitant l'orifice 301. L'accrocheur d'aile 42 est également pourvu d'un volant de manoeuvre 423 en forme de tube circulaire entourant le corps 421 et relié à celui-ci par deux bras rigides 424. En variante, ce volant de manoeuvre peut être remplacé par des poignées.

Les éléments 32 à 34 définissent ensemble un trajet fixe d'écoulement du carburant dans l'engin 1, entre deux lignes flexibles constituées respectivement par les tuyaux 20 et 40. Ce trajet d'écoulement fixe et ces lignes flexibles s'étendent entre des premiers moyens 21 de branchement sur le réseau R et des deuxièmes moyens 42 de branchement sur l'orifice 301.

On note E l'écoulement de carburant entre la bouche 200 et le réservoir 300.

L'engin 1 est équipé d'un compteur 50 qui permet de mesurer la quantité de carburant transitant par le conduit 34, c'est-à-dire la quantité de carburant délivrée au réservoir 300. L'engin comporte également un régulateur de pression 60 qui permet de contrôler la pression de l'écoulement E dans le conduit 34.

L'engin 1 porte un vérin hydraulique 70 dont la tige 71 est équipée d'une plateforme 72 sur laquelle se tient un opérateur qui peut manipuler la partie aval du tuyau 40, notamment l'accrocheur d'aile 42. La tige 71 permet à l'opérateur, par son mouvement vertical ascendant ou descendant représenté par la double flèche F₁, d'accéder à l'orifice d'entrée 301.

Une pompe hydraulique à moteur électrique 73 est utilisée pour fournir au vérin 70 une quantité d'huile sous pression suffisante pour la manoeuvre de la tige 71, vers le haut ou vers le bas. Un jeu d'électrovanne 74 permet de contrôler l'écoulement d'huile sous pression de la pompe 73 vers le vérin 70.

Une unité électronique 110 est montée sur le châssis de l'engin 1 et contrôle, par des signaux électroniques adaptés S₅₀, S₆₀ et S₇₄, respectivement le compteur 50, le régulateur de pression 60 et le jeu d'électrovannes 74.

Les éléments 73 et 110 sont alimentés en courant électrique par des moyens non représentés.

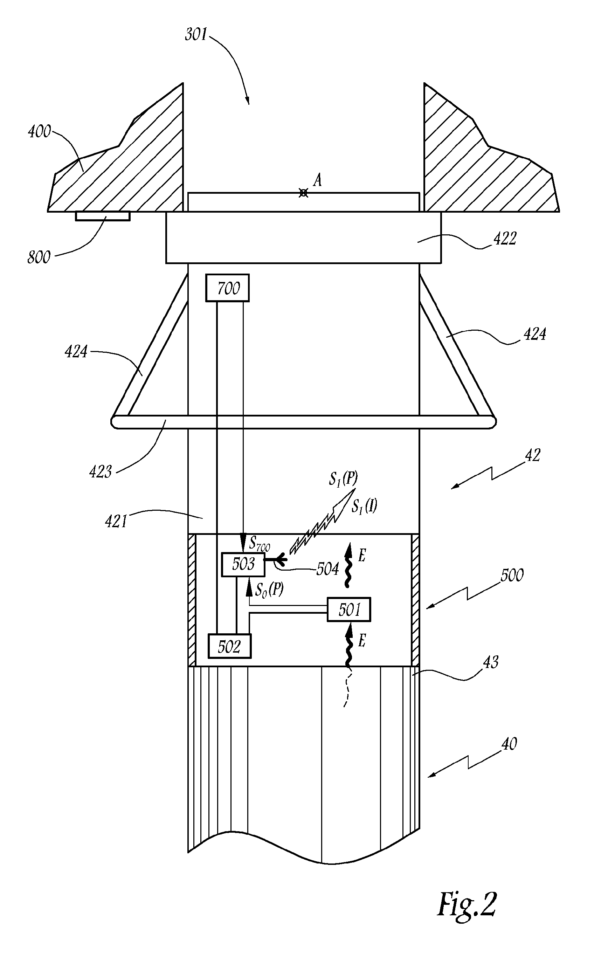

Un module 500 est disposé entre l'extrémité aval 43 du tuyau 40 et l'accrocheur d'aile 42. Ce module est représenté en coupe à la figure 2, alors que l'accrocheur d'aile 42 et le tuyau 40 sont représentés en vue de côté.

Le module 500 se présente sous la forme d'une bague de connexion entre l'extrémité 43 et l'accrocheur d'aile 42. Il comprend une cellule 501 de mesure de la pression de l'écoulement E pénétrant dans l'accrocheur d'aile 42.

Compte tenu de l'emplacement du module 500 qui est à proximité immédiate de l'accrocheur d'aile 42, la cellule 501 permet de connaître, avec un dégrée de précision satisfaisant, la pression de l'écoulement E lorsqu'il pénètre dans le réservoir 300, à travers l'orifice 301. En d'autres termes, l'emplacement du module 500, au niveau du moyen de raccordement formé par l'accrocheur d'aile 42, permet à la cellule 501 de donner une valeur représentative de la pression P de l'écoulement E transitant à travers l'accrocheur d'aile 42.

Dans l'exemple, le module 500 est en contact de l'accrocheur d'aile 42, de sorte que la distance entre la cellule 501 et le point A de transfert du carburant du système d'avitaillement vers l'aéronef est inférieure à 50 cm.

Le point de transfert du carburant A est défini à la sortie de l'accrocheur d'aile 42 comme le point où la propriété du carburant passe de la compagnie fournissant le carburant à la compagnie exploitante de l'aéronef.

La cellule 501 est alimentée en énergie électrique à partir d'une batterie 502, intégrée au module 500 et qui est rechargée lorsque l'accrocheur d'aile 42 est rangé dans un réceptacle 80 prévu à cet effet sur l'engin 1. Le réceptacle 80 est équipé d'un chargeur 82 positionné de telle sorte que la batterie 502 vient en regard de ce chargeur lorsque l'accrocheur d'aile 42 est disposé dans le réceptacle 80, ce qui permet de charger la batterie 502 par induction.

En variante, la batterie 502 peut être remplacée par un condensateur, auquel cas le chargeur 82 est adapté en conséquence.

La cellule 501 est raccordée électriquement à un émetteur radio 503 lui-même alimenté par la batterie 502. La cellule 501 fournit à l'émetteur 503 un signal électronique S₀(P) correspondant à la valeur de la pression qu'elle détecte.

L'émetteur 503 est équipé d'une antenne 504 qui lui permet d'émettre un signal non filaire S₁(P) incluant des données correspondant à la valeur de la pression P détectée par la cellule 501.

A titre d'exemple, le mode de transmission du signal S₁(P) peut être par radio, par infra-rouge, etc...

Par ailleurs, l'engin 1 est équipé d'un récepteur 600 apparié au module 500 et dont l'antenne ou capteur 604 lui permet de recevoir le signal S₁(P).

Le récepteur 600 est alors en mesure de transmettre à l'unité électronique de contrôle 110 un signal S₂(P) représentatif de la pression de l'écoulement E détectée par la cellule 501.

L'unité 110 peut alors tenir compte de la valeur de cette pression P pour piloter, notamment, le régulateur de pression 60 au moyen du signal électronique approprié S₆₀. Le compteur 50 fournit, quant à lui, à l'unité 110, un signal S'₅₀ représentatif du comptage qu'il effectue.

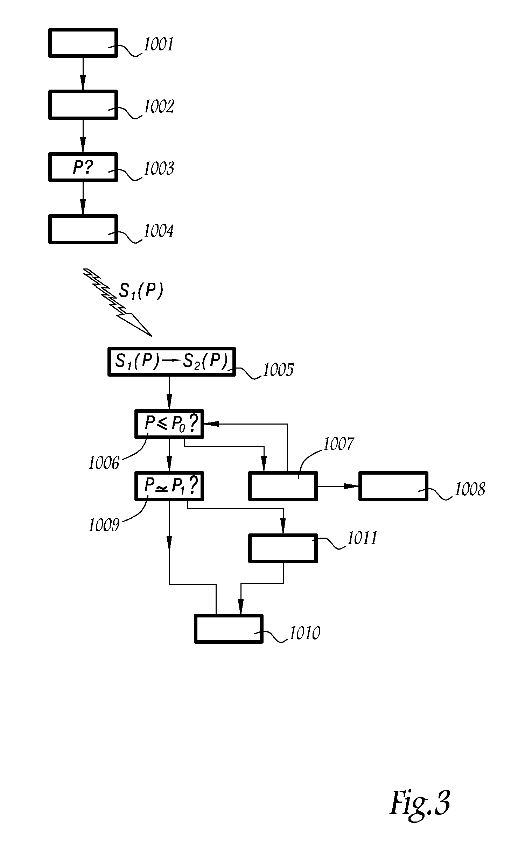

Comme représenté à la figure 3, lorsque une opération d'avitaillement est initiée par une étape de départ 1001, l'unité électronique de commande 110 commande des dispositifs électroniques de régulation et de contrôle de l'écoulement E entre la bouche 200 et le réservoir 300, notamment le régulateur de pression 60. Ceci a lieu dans une seconde étape 1002 de la méthode.

Dans une troisième étape 1003, la cellule 501 détermine la pression de l'écoulement E dans le module 500, c'est-à-dire à proximité du point de transfert A.

Cette pression étant déterminée, elle est intégrée au signal non filaire S₁(P) qui est émis par l'émetteur 503 lors d'une étape suivante 1004.

Les étapes 1003 et 1004 sont répétées à intervalle régulier pendant toute la durée de l'opération d'avitaillement, par exemple toutes les 10 ms.

Au cours d'une étape suivante 1005, le signal S₁(P) émis par l'émetteur 503 est reçu par le récepteur 600 et transmis à l'unité 110 sous la forme du signal S₂(P).

Au cours d'une étape suivante 1006, l'unité 110 extrait la valeur de la pression P du signal S₂(P) et compare cette valeur à une valeur de seuil P₀ égale, par exemple, à 3,5 bar. Si le signal S₁(P) est codé, il est décodé lors de cette étape. Au cours de cette étape, la valeur P de la pression est stockée dans une mémoire 120 associée à l'unité 110.

Si la pression P est supérieure à cette valeur de référence, un cycle automatique est mis en action dans une étape 1007. Dans un premier temps ce cycle corrige la valeur pour tenter de remettre l'écart à un niveau acceptable. Cet écart est à nouveau mesuré dans l'étape 1006. Si cet écart ne diminue pas, alors le système force un mode sécurisé qui va vers une limitation de la pression, c'est-à-dire un fonctionnement en mode dégradé. Et si cette pression ne diminue pas vers la consigne imposée, alors l'opération d'avitaillement est arrêtée dans une étape 1008. Une alarme est alors activée pour que l'opérateur puisse prendre des mesures de repli appropriées.

Si la valeur de la pression P est inférieure à la valeur de référence P₀, alors cette valeur de pression P est comparée à une valeur de consigne P₁ dans une étape 1009. Si la valeur P peut être considérée comme sensiblement égale à la valeur P₁, par exemple avec un écart paramétrable inférieur à 5%, l'opération d'avitaillement continue sans modification des paramètres de réglage du régulateur de pression 60, ceci dans une étape 1010. Si la pression P s'écarte de plus de 5% de la valeur P₁, le réglage du régulateur 60 est ajusté dans une étape 1011 avant que l'opération d'avitaillement soit poursuivie à l'étape 1010.

Les étapes 1005 à 1011 sont mises en oeuvre après chaque réception d"un signal S₁(P). En particulier, les valeurs de la pression P successivement reçues de la cellule 501 sont stockées dans la mémoire 120 pendant toute l'opération d'avitaillement.

Pour fiabiliser la transmission du signal S₁(P) entre l'émetteur 503 et le récepteur 600, cette transmission a lieu simultanément, sur trois canaux différents ou avec des adresses différentes. Dans ce cas, les données transmises sur les différents canaux ou récupérées par les différentes adresses sont comparées et validées si leurs valeurs demeurent à l'intérieur d'écarts jugés acceptables, par exemple 1%. En cas de défaillance d'une chaîne de transmission, sur un canal ou par une adresse spécifique, cette chaîne défaillante est automatiquement isolée et une pré-alerte est émise à destination de l'opérateur. Dans le cas peu probable où deux chaînes de transmission de signal sont simultanément défaillantes, un fonctionnement en mode dégradé est mis en place dans lequel le régulateur de pression 60 est piloté pour réguler la pression en sortie du conduit 34 à une valeur strictement inférieure à la valeur P₀ de sorte que, compte tenu des pertes de charge qui se produisent nécessairement dans le tuyau 40, la pression au niveau du point de transfert A est forcément inférieure à cette valeur.

En mode de fonctionnement non dégradé, l'invention permet de piloter le régulateur de pression 60 avec une valeur de consigne supérieure à la valeur P₀, pour que la pression de l'écoulement E au niveau du point de transfert et au sein de l'accrocheur d'aile 42 soit la plus proche possible de la valeur P₁ qui peut être égale à la valeur P₀, soit 3,5 bar dans l'exemple, ou inférieure à celle-ci.

En plus ou à la place de la cellule 501, le module 500 peut être équipé d'une cellule de détection de température de l'écoulement E, d'une cellule de mesure, éventuellement métrologique, du volume, de cet écoulement, et/ou d'une cellule de mesure de turbidité ou de densité du carburant distribué, la valeur de ces paramètres étant transmise à l'unité 110 comme expliqué précédemment pour le signal représentatif de la pression. Les moyens d'émission peuvent être communs aux différentes cellules de mesure lorsque plusieurs cellules sont intégrées au module 500.

Par ailleurs, selon un aspect avantageux mais optionnel de l'invention, un capteur d'identification 700 est monté sur le corps 421 de l'accrocheur d'aile, à proximité de la bague 422. Ce capteur, s'il n'est est alimenté en courant électrique que par la batterie 502, est relié à l'émetteur 503. Ce capteur est adapté pour lire une étiquette 800 fixée sur l'aile 400 de l'avion, à proximité de l'orifice 301 et contenant des identifiants I de l'avion, par exemple son immatriculation, le type de carburant requis et/ou des données administratives relatives au paiement de la transaction d'avitaillement. A titre d'exemple, l'étiquette 800 peut être une étiquette de type RFID et le capteur 700 est adapté pour récupérer des données à partir de cette étiquette.

Les données collectées grâce au capteur 700 sont adressées à l'émetteur 503 sous la forme d'un signal électronique S₇₀₀ et l'émetteur 503 le transmet sous la forme d'un signal non filaire S₁(I) à l'unité 110, par l'intermédiaire du récepteur 600. Cette identification de l'aéronef a lieu automatiquement au début de l'opération d'avitaillement. Ceci évite les risques graves d'incompatibilité sur le type de carburant fourni à l'aéronef devant être avitaillé.

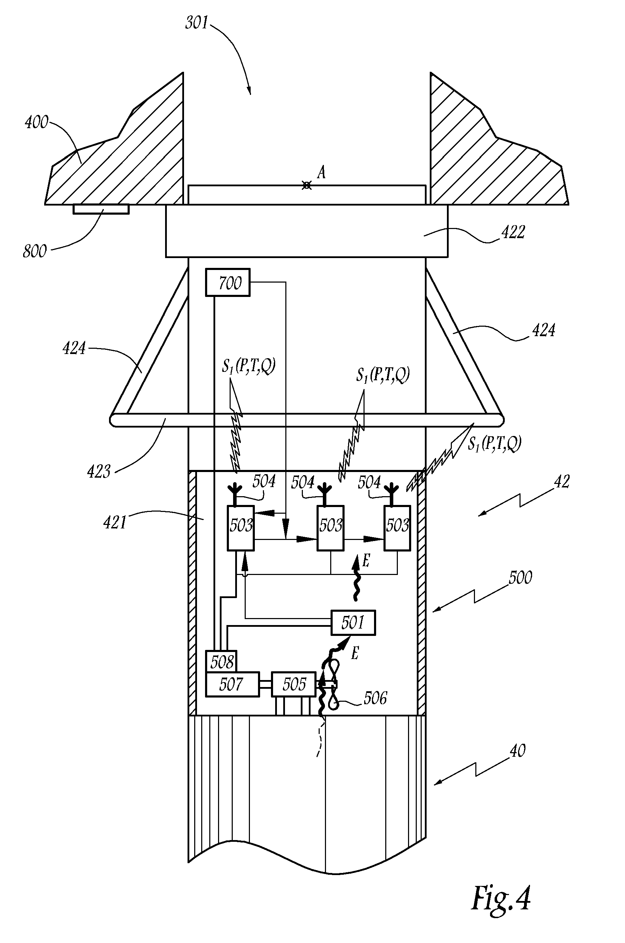

Dans le deuxième mode de réalisation de l'invention représenté à la figure 4, les éléments analogues à ceux du premier mode de réalisation portent les mêmes références. L'accrocheur d'aile 42 de ce mode de réalisation est associé à un module 500 qui comprend une cellule 501 de mesure de la pression, de la température et du volume, éventuellement métrologique, de l'écoulement E. En d'autres termes, la cellule 501 de ce mode de réalisation est une cellule triple permettant de déterminer trois paramètres physiques de l'écoulement E. Ceci n'exclut pas la détermination de paramètres nouveaux, comme la turbidité du carburant, sa densité, et de manière plus globale de toutes les caractéristiques physiques utiles, spécifiques au carburant délivré et propres au déroulement de l'opération d'avitaillement.

A la place de la batterie 502 du premier mode de réalisation, une turbine 505 a son hélice 506 installée sur le trajet de l'écoulement E. Cette turbine 505 est couplée à un alternateur 507 et à un redresseur 508 permettant de fournir un courant continu à la cellule 501, à trois émetteurs 503 et à un capteur 700 analogues à ceux du premier mode de réalisation.

En pratique le rotor de l'alternateur 507 peut être constitué par des aimants montés sur l'arbre de l'hélice 506 et disposés en regard d'une bobine fixe. Il est également possible de prévoir la charge par induction d'une batterie ou d'un condensateur lorsque le module 500 est rangé dans un réceptacle analogue à celui du premier mode de réalisation. Ceci permet de disposer d'énergie électrique pour les éléments 501 et 502 avant même que l'écoulement E soit établi.

Ainsi, dans les deux modes de réalisation considérés, des moyens autonomes formés par la batterie 502 du premier mode de réalisation ou par l'ensemble 505-508 du deuxième mode de réalisation, permettent d'alimenter la cellule de mesure 501, le ou les émetteurs 503 et le capteur 700. Il n'est dons pas nécessaire d'alimenter le module 500 et ses accessoires en courant à partir de l'oléoserveur 1.

L'hélice 506 peut constituer le moyen de comptage, éventuellement métrologique, principal ou secondaire, du volume de carburant distribué.

Dans ce mode de réalisation, trois émetteurs 503 sont utilisés en étant repartis autour du corps 421 de l'accrocheur d'aile 42, de telle sorte que leurs antennes ou moyens d'émissions 504 peuvent émettre dans plusieurs directions, ce qui garantit une bonne transmission du signal tel que le signal S₁(P) mentionné pour le premier mode de réalisation, à destination du récepteur 600. Ces émetteurs 503 peuvent être configurés pour émettre vers trois adresses distinctes de récepteur, plusieurs récepteurs 600 pouvant être prévus sur l'engin 1, dans le but de sécuriser et fiabiliser les échanges non filaires de données.

Dans ce deuxième mode de réalisation, le signal émis par les émetteurs 503 est représentatif des valeurs de la pression P, de la température T et du volume V de l'écoulement E depuis le début de l'opération d'avitaillement. Ce signal S₁(P, T, V) est traité par le ou les récepteurs 600 et par l'unité 110 d'une façon comparable à ce qui est expliqué pour le premier mode de réalisation. En particulier, un signal S₂(P, T, V) représentatif des valeurs de pression, température et volume est transmis par le ou les récepteur(s) 600 à l'unité électronique 110. La comparaison avec des valeurs de seuil est effectuée par l'unité 110 pour chacun des paramètres physiques concernés ou pour certains d'entre eux seulement. Les valeurs de ces paramètres sont stockées dans la mémoire 120, comme dans le premier mode de réalisation.

Dans les deux modes de réalisation, le fait de stocker dans la mémoire 120 des valeurs représentatives de certains paramètres de l'écoulement E permet d'effectuer a posteriori une analyse du bon fonctionnement de l'engin 1 au cours d'une opération d'avitaillement. Il est en particulier possible à la société qui distribue le carburant de remettre à l'exploitant de l'aéronef ou aux autorités un relevé reprenant toutes les valeurs du paramètre ou des paramètres, par exemple la pression, relevés à proximité du point de transfert A au cours d'une opération d'avitaillement. Ceci permet d'assurer qu'aucun dépassement d'une valeur de seuil n'a eu lieu et limite la vérification périodique des appareils de contrôle de l'écoulement E tels que le régulateur 60. La mémoire 120 peut également être utilisée pour stocker les données d'identification I collectées par le capteur 700, ce qui couvre les besoins de traçabilité des opérations d'avitaillement en facilitant de surcroît le travail d'imputation des coûts d'avitaillement.

L'invention est décrite ci-dessus dans le cas où elle est mise en oeuvre grâce à un module 500 intercalé entre l'extrémité aval 43 du tuyau 40 et l'accrocheur d'aile 42, ce qui permet d'utiliser un accrocheur d'aile standard, en apposant éventuellement sur l'extérieur de son corps un capteur d'identification 700. En variante, les moyens de détermination de la valeur du paramètre d'écoulement, les moyens d'émission et, éventuellement, les moyens d'identification, tels que les éléments 501, 503 et 700 susmentionnées, sont intégrés à un accrocheur d'aile conçu à cet effet.

L'invention est décrite ci-dessus dans le cas de sa mise en oeuvre avec un oléoserveur raccordé sur un oléoréseau. Elle peut toutefois être mise en oeuvre avec un avitailleur équipé d'une citerne de transport de carburant jusqu'à proximité de l'aéronef à avitailler.

Bien que décrite ci-dessus lors de son utilisation pour le remplissage d'un réservoir d'avion, l'invention est utilisable pour le remplissage d'un réservoir de tout type d'aéronef, notamment d'un hélicoptère.

## Revendications

1. Engin d'avitaillement (1) d'un aéronef en carburant, cet engin comprenant un conduit (40) équipé de moyens (42) de raccordement sur un orifice d'entrée (301) d'un réservoir de carburant (300) d'un aéronef (400) et, au niveau ou au voisinage des moyens de raccordement (42), des moyens (501) de détermination de la valeur d'au moins un paramètre (P, T, V) représentatif d'un écoulement de carburant (E) transitant par les moyens de raccordement, **caractérisé en ce que** l'engin comprend,
- au moins un récepteur (600) embarqué sur l'engin d'avitaillement (1)
- des moyens (503, 504) d'émission, vers le récepteur (600), d'un signal (S₁(P), S₁(P, T, V)) représentatif d'une valeur de paramètre (P, T, V) déterminée par les moyens de détermination (501),
- une unité électronique (110) apte à recevoir de la part du récepteur (600) un signal (S₂(P), S₂(P, T, V)) représentatif du paramètre (P, T, V) et à piloter au moins un dispositif (50, 60) de régulation et/ou de contrôle de l'écoulement (E) en fonction du signal reçu du récepteur,
**en ce que** les moyens de détermination (501) sont aptes à déterminer une valeur de la pression (P) de l'écoulement de carburant (E), **en ce que** les moyens d'émission (503, 504) sont aptes à émettre vers les récepteur un signal (S₁(P), S₁(P, T, V)) représentatif de la valeur de la pression (P) déterminée par les moyens de détermination et **en ce que** l'unité électronique est apte à comparer la valeur de pression (P) à une valeur de référence (P₀) et à corriger ou limiter la valeur de la pression de l'écoulement (E) si la valeur de pression (P) est supérieure à la valeur de référence (P₀).

2. Engin selon la revendication 1, **caractérisé en ce que** les moyens de détermination comprennent un capteur (501) de pression (P) de l'écoulement (E), un capteur (501) de volume (V) de l'écoulement (E) et/ou un capteur (501) de température (T) de l'écoulement (E).

3. Engin selon l'une des revendications précédentes, **caractérisé en ce qu'**il comprend en outre, au niveau ou au voisinage des moyens de raccordement (42), des moyens (700) d'identification d'un aéronef et des moyens (503, 504) d'émission vers un récepteur (600) embarqué sur l'engin d'avitaillement d'un signal S₁(I) représentatif du résultat de l'identification obtenue par les moyens d'identification.

4. Engin selon l'une des revendications précédentes, **caractérisé en ce que** les moyens d'émission sont des moyens d'émission sans fil (503, 504).

5. Engin selon l'une des revendications précédentes, **caractérisé en ce que** les moyens d'émission sont aptes à émettre le signal représentatif (S₁(P), S₁(P, T, V), S₁(I)) sur au moins deux canaux distincts, de préférence trois canaux distincts, ou vers au moins deux adresses distinctes, de préférence trois adresses distinctes.

6. Engin selon l'une des revendications précédentes, **caractérisé en ce qu'**il comprend des moyens (120) d'enregistrement des valeurs déterminées du ou des paramètres (P, T, V) et, éventuellement, des données d'identification (I) de l'aéronef.

7. Engin selon l'une des revendications précédentes, **caractérisé en ce qu'**il comprend, au niveau ou au voisinage des moyens de raccordement (42), des moyens autonomes (502 ; 505-508) d'alimentation des moyens de détermination (501), des moyens d'émission (503, 504) et, le cas échéant, des moyens d'identification (700).

8. Engin selon l'une des revendications précédentes, **caractérisé en ce qu'**il s'agit d'un oléoserveur (1) équipé d'un tuyau (20) permettant de le raccorder sur une bouche (200) de sortie d'un réseau fixe (R) de distribution de carburant et **en ce que** l'unité électronique (110) pilote des dispositifs (50, 60) qui régulent et contrôlent l'écoulement (E) entre la bouche (200) et l'entrée (301) du réservoir de l'aéronef (400), en fonction du signal (S₂(P), S₂(P, T, V)) reçu du récepteur (600).

9. Engin selon l'une des revendications 1 à 7, **caractérisé en ce qu'**il s'agit d'un avitailleur équipé d'une citerne et **en ce que** l'unité électronique (110) pilote des dispositifs qui régulent et contrôlent l'écoulement (E) entre la citerne et l'entrée (301) du réservoir de l'aéronef (400), en fonction du signal (S₂(P), S₂(P, T, V)) reçu du récepteur (600).

10. Procédé d'avitaillement d'un aéronef en carburant dans lequel on connecte, par des moyens de raccordement (42), un conduit (40) porté par un engin d'avitaillement (1) à l'entrée (301) d'un réservoir (300) de carburant de l'aéronef (400) et on fait circuler un écoulement (E) de carburant dans le conduit jusque dans le réservoir, **caractérisé en ce qu'**il comprend des étapes consistant, au cours d'une opération d'avitaillement, à :
a) déterminer (1003) la valeur d'au moins un paramètre (P, T, V) représentatif de l'écoulement (E) au niveau ou au voisinage des moyens de raccordement (42), dont la pression (P) de cet écoulement (E) ;
b) émettre (1004) vers au moins un récepteur (600) embarqué sur l'engin d'avitaillement (1) un signal (S₁(P), S₁(P, T, V)) représentatif de la valeur de pression (P) déterminée lors de l'étape a) ;
c) recevoir (1005 au moyen du récepteur le signal (S₁(P), S₁(P, T, V)) représentatif de la pression ;
d) comparer (1006) la valeur de la pression (P) à une valeur de référence (P₀) ;
e) piloter automatiquement, en fonction du signal (S₁(P), S₁(P, T, V) reçu par le récepteur (600), au moins un dispositif (50, 60) de régulation et/ou de contrôle de l'écoulement (E) en mettant en oeuvre, lorsque la pression (P) est supérieure à la pression de référence (P₀), une correction (1007) de la valeur de la pression pour réduire l'écart entre ces pressions, un passage en mode de fonctionnement sécurisé avec limitation de la pression ou un arrêt (1008) de l'opération d'avitaillement.

11. Procédé selon la revendication 10, **caractérisé en ce que** les étapes a) et b) sont effectuées de façon continue ou répétée au cours d'une opération d'avitaillement et les valeurs du paramètre (P, T, V) déterminées lors de l'étape a) (1003) sont enregistrées (1006) sur la durée de l'opération d'avitaillement.

## Patentansprüche

1. Fahrzeug (1) zum Betanken eines Flugzeugs mit Kraftstoff, wobei dieses Fahrzeug eine Leitung (40) umfasst, die mit Mitteln (42) zum Anschließen an eine Einfüllöffnung (301) eines Kraftstofftanks (300) eines Flugzeugs (400) und an oder in der Nähe der Mittel (42) zum Anschließen mit Mitteln (501) zum Bestimmen des Wertes mindestens eines Parameters (P, T, V) ausgerüstet ist, der für einen durch die An-schlussmittel hindurchgehenden Kraftstoffdurchfluss (E) repräsentativ ist, **dadurch gekennzeichnet, dass** das Fahrzeug umfasst
- mindestens einen Empfänger (600), der auf dem Betankungsfahrzeug (1) mitgeführt wird
- Mittel (503, 504) zum Senden eines Signals (S₁(P), S₁(P, T, V)) an den Empfänger (600), das für einen Wert des Parameters (P, T, V) repräsentativ ist, der von den Bestimmungsmitteln (501) bestimmt wird,
- eine elektronische Einheit (110), die geeignet ist, von dem Empfänger (600) ein für den Parameter (P, T, V) repräsentatives Signal (S₂(P), S₂(P, T, V)) zu empfangen und mindestens eine Vorrichtung (50, 60) zur Regelung und/oder Steuerung des Durchflusses (E) abhängig vom von dem Empfänger empfangenen Signal zu steuern,
dass die Bestimmungsmittel (501) geeignet sind, einen Wert des Drucks (P) des Kraftstoffdurchflusses (E) zu bestimmen, dass die Sendemittel (503, 504) geeignet sind, dem Empfänger ein für den Wert des Drucks (P), der von den Bestimmungsmitteln bestimmt wurde, repräsentatives Signal (S₁(P), S₁(P, T, V)) zu senden und dass die elektronische Einheit geeignet ist, den Wert des Drucks (P) mit einem Referenzwert (P₀) zu vergleichen und den Wert des Drucks des Durchflusses (E) zu korrigieren oder zu begrenzen, wenn der Wert des Drucks (P) größer ist als der Referenzwert (P₀).

2. Fahrzeug nach Anspruch 1, **dadurch gekennzeichnet, dass** die Bestimmungsmittel einen Drucksensor (501, P) des Durchflusses (E), einen Volumensensor (501, V) des Durchflusses (E) und/oder einen Temperatursensor (501, T) des Durchflusses (E) umfassen.

3. Fahrzeug nach einem der vorhergehenden Ansprüche, **dadurch gekennzeichnet, dass** es außerdem an oder in der Nähe der Anschlussmittel (42) Mittel (700) zur Identifikation eines Flugzeugs und Mittel (503, 504) zum Senden eines Signals (S₁(I) an den mit dem Betankungsfahrzeug mitgeführten Empfänger (600) umfasst, das für das von den Identifikationsmitteln erhaltenen Identifikationsresultat repräsentativ ist.

4. Fahrzeug nach einem der vorhergehenden Ansprüche, **dadurch gekennzeichnet, dass** die Sendemittel drahtlose Sendemittel (503, 504) sind.

5. Fahrzeug nach einem der vorhergehenden Ansprüche, **dadurch gekennzeichnet, dass** die Sendemittel geeignet sind, das repräsentative Signal (S₁(P), S₁(P, T, V), S₁(I)) auf mindestens zwei verschiedenen Kanälen, vorzugsweise drei verschiedenen Kanälen oder zu mindestens zwei verschiedenen Adressen, vorzugsweise drei verschiedenen Adressen zu senden.

6. Fahrzeug nach einem der vorhergehenden Ansprüche, **dadurch gekennzeichnet, dass** es Mittel (120) zur Aufzeichnung von bestimmten Werten des oder der Parameter (P, T, V) und gegebenenfalls der Identifikationsdaten (I) des Flugzeugs umfasst.

7. Fahrzeug nach einem der vorhergehenden Ansprüche, **dadurch gekennzeichnet, dass** es an oder in der Nähe der Anschlussmittel (42) autonome Mittel (502; 505 - 508) zur Versorgung der Bestimmungsmittel (501), der Sendemittel (503, 504) und gegebenenfalls der Identifikationsmittel (700) umfasst.

8. Fahrzeug nach einem der vorhergehenden Ansprüche, **dadurch gekennzeichnet, dass** es sich um einen Tankwagen (1) handelt, der mit einem Rohr (20) ausgerüstet ist, das gestattet, es an eine Auslassöffnung (200) eines festen Netzes (R) zur Ausgabe von Kraftstoff anzuschließen und das die elektronische Einheit (110) Vorrichtungen (50, 60) steuert, die den Durchfluss (E) zwischen der Öffnung (200) und der Einfüllöffnung (301) des Tanks des Flugzeugs (400) abhängig von dem vom Empfänger (600) empfangenen Signal (S₂(P), S₂(P, T, V)) einstellen und steuern.

9. Fahrzeug nach einem der Ansprüche 1 bis 7, **dadurch gekennzeichnet, dass** es sich um einen mit einem Tank ausgerüsteten Versorgungsfahrzeug handelt, und dass die elektronische Einheit (110) Vorrichtungen steuert, die den Durchfluss (E) zwischen dem Tank und der Einfüllöffnung (301) des Tanks des Flugzeugs (40), abhängig von dem vom Empfänger (600) empfangenen Signal (S₂(P), S₂(P, T, V)) einstellen und steuern.

10. Verfahren zum Betanken eines Flugzeugs mit Kraftstoff, bei dem über Anschlussmittel (42) eine von einem Betankungsfahrzeug (1) mitgeführte Leitung (40) an die Einfüllöffnung (301) eines Kraftstofftanks (300) des Flugzeugs (400) angeschlossen wird und ein Kraftstoffdurchfluss (E) in der Leitung bis zu dem Tank geführt wird, **dadurch gekennzeichnet, dass** es Schritte umfasst, die während einer Betankungsoperation darin bestehen:
a) den Wert mindestens eines Parameters (P, T, V) zu bestimmen (1003), der repräsentativ für den Durchfluss (E) an oder in der Nähe der Anschlussmittel (42) ist, darunter den Druck (P) dieses Durchflusses (E);
b) ein für den während des Schritts a) bestimmten Druckwert (P) repräsentatives Signal (S₁(P), S₁(P, T, V)) an mindestens einen auf dem Betankungsfahrzeug mitgeführten Empfänger (600) zu senden (1004);
c) mittels des Empfängers das für den Druck repräsentative Signal (S₁(P), S₁(P, T, V)) zu empfangen (1005);
d) den Wert des Drucks (P) mit einem Referenzwert (P₀) zu vergleichen (1006);
e) mindestens eine Vorrichtung (50, 60) zur Regelung und/oder Steuerung des Durchflusses (E) abhängig von dem vom Empfänger (600) empfangenen Signal (S₁(P), S₁(P, T, V)) automatisch zu steuern, indem, wenn der Druck (P) größer ist als der Referenzdruck (P₀), eine Korrektur (1007) des Wertes des Drucks zum Reduzieren des Abstands zwischen diesen Drücken, ein Übergang in einen gesicherten Funktionsmodus mit Begrenzung des Drucks oder ein Anhalten (1008) der Betankungsoperation durchgeführt wird.

11. Verfahren nach Anspruch 10, **dadurch gekennzeichnet, dass** die Schritte a) und b) in kontinuierlicher oder wiederholter Weise während einer Betankungsoperation durchgeführt werden und die Werte des Parameters (P, T, V), die während des Schrittes a) (1003) bestimmt wurden, über die Dauer der Betankungsoperation aufgezeichnet (1006) werden.

## Claims

1. A piece of equipment (1) for refueling an aircraft, said equipment comprising a pipe (40) provided with means (42) for connecting onto an intake port (301) of a fuel tank (300) of an aircraft (400) and, at or in the vicinity of the connection means (42) to the aircraft, means (501) for determining the value of at least one parameter (P, T, V) representative of a flow of fuel (E) passing through the connection means, **characterized in that** the equipment comprises
- at least one receiver (600) onboard the refueling equipment (1),
- means (503, 504) for transmitting, to the receiver (600), a signal (S₁(P), S₁(P, T, V)) representative of a parameter value (P, T, V) predetermined by the aforementioned determination means (501),
- an electronic unit (110) capable of receiving, from the receiver (600), a signal (S₂(P), S₂(P, T, V)) representative of the aforementioned parameter (P, T, V) and of driving at least one flow (E) control and monitoring device (50, 60) in accordance with the signal received from the receiver.
**in that** the determination means (501) are adapted to determine a value of the pressure (P) of the flow (E) of fuel, **in that** the transmission means (503, 504) adapted to send to the receiver a signal (S₁(P), S₁(P, T, V)) representative of the value of the pressure (P) determined by the determination means and **in that** the electronic unit is adapted to compare the value of the pressure (P) to a reference value (P₀) and to correct or to limit the value of the pressure of the flow (E) if the value of the pressure (P) is larger than the reference value (P₀).

2. The equipment according to claim 1, **characterized in that** the determination means comprise a flow (E) pressure (P) sensor (501), a flow (E) volume (V) sensor (501), and/or a flow (E) temperature (T) sensor (501).

3. The equipment according to one of the preceding claims, **characterized in that** it also comprises, at or near the connection means (42), means (700) for identifying an aircraft and means (503, 504) for transmitting, toward a receiver (600) onboard the refueling equipment, a signal S₁(I) representative of the result of the identification obtained by the identification means.

4. The equipment according to one of the preceding claims, **characterized in that** the transmission means are wireless transmission means (503, 504).

5. The equipment according to one of the preceding claims, **characterized in that** the transmission means can transmit the representative signal (S₁(P), S₁(P, T, V), S₁(I)) on at least two distinct channels, preferably three distinct channels, or toward at least two distinct addresses, preferably three distinct addresses.

6. The equipment according to one of the preceding claims, **characterized in that** it comprises means (120) for recording determined values of the parameter(s) (P, T, V) and, possibly, identification data (I) for the aircraft.

7. The equipment according to one of the preceding claims, **characterized in that** it comprises, at or near the connection means (42), independent supply means (502; 505-508) for the determination means (501), the transmission means (503, 504), and, if applicable, the identification means (700).

8. The equipment according to one of the preceding claims, **characterized in that** it is a servicer (1) equipped with a hose (20) making it possible to connect it onto an output mouth (200) of a fixed fuel distribution grid (R) and **in that** the electronic unit (110) drives devices (50, 60) that control and monitor the flow (E) between the mouth (200) and the inlet (301) of the aircraft's fuel tank (400), based on the signal (S₂(P), S₂(P, T, V)) received from the receiver (600).

9. The equipment according to one of claims 1 to 7, **characterized in that** it involves a fueling tanker equipped with a tank and **in that** the electronic unit (110) drives devices that control and monitor the flow (E) between the tank and the intake (301) of the fuel tank of the aircraft (400), based on the signal (S₂(P), S₂(P, T, V)) received from the receiver (600).

10. A method for refueling an aircraft that can be implemented using equipment in which one connects, using connection means (42), a pipe (40) supported by refueling equipment (1) to the intake (301) of a fuel tank (300) of an aircraft (400) and causes a flow of fuel (E) to circulate in the pipe as far as the fuel tank, **characterized in that** this method comprises the steps of, during a refueling operation:
a) determining (1003) the value of at least one parameter (P, T, V) representative of the flow (E) at or in the vicinity of the connection means (42),
b) transmitting (1004), to at least one receiver (600) onboard the refueling apparatus (1), a signal (S₁(P), S₁(P, T, V)) representative of a value of pressure (P) determined during step a);
c) receiving (1005) via the receiver the signal (S₁(P), S₁ (P, T, V)) representative of the pressure;
d) comparing (1006) the value of pressure (P) to a reference value (P₀);
e) automatically driving, in accordance with the signal (S₁(P), S₁(P, T, V)) received by the receiver (600), at least one flow (E) control and/or monitoring device (50, 60), by implementing, when the pressure (P) is larger to the reference value (P₀), a correction (1007) of the value of pressure to reduce a difference between these pressures, a passage into a secure functioning mode with a limitation of the pressure or a stop (1008) of the refueling operation.

11. The method according to claim 10, **characterized in that** steps a) and b) are carried out continuously or repeatedly during a refueling operation and that the values of the parameters (P, T, V) determined during step a) (1003) are recorded (1006) over the duration of the refueling operation.
